# EUROPÄISCHE PATENTSCHRIFT

(11) **EP 2 111 948 B1**
(45) Veröffentlichungstag und Bekanntmachung des Hinweises auf die Patenterteilung: **29.06.2011**
(21) Anmeldenummer: 09005553.4
(22) Anmeldetag: 21.04.2009
(51) Int. Cl.: B24B 23/00, B23Q 11/00, B25F 5/00

(54) **Elektrohandwerkzeuggerät**
Electric hand tool
Machine-outil électrique manuelle

(30) Priorität: 25.04.2008 DE 102008022277
(43) Veröffentlichungstag der Anmeldung: 28.10.2009
(73) Patentinhaber: Metabowerke GmbH, 72622 Nürtingen (DE)
(72) Erfinder: Will, Manuel, 72793 Pfullingen (DE)
(74) Vertreter: Raunecker, Klaus Peter

(56) Entgegenhaltungen:
- EP-A- 0 806 268
- WO-A-03/002889
- DE-A1- 3 209 162
- DE-A1- 3 722 629
- GB-A- 832 048
- JP-A- 11 125 311

## Beschreibung

Die Erfindung betrifft ein Elektrohandwerkzeuggerät, insbesondere Winkelschleifer, umfassend einen Anker mit einer in einer Längsrichtung erstreckten Ankerwelle mit einer werkzeugseitigen Abtriebsseite und einem gegenüberliegenden werkzeugabgewandten und einem Handgriff zugewandten Ende, die einen Teil eines Antriebsstrangs in Richtung auf ein rotierend, exzentrisch oder hin- und hergehend antreibbares Werkzeug, wie z.B. eine Trenn- oder Schruppscheibe, bildet.

Ein gattungsgemäßes Elektrohandwerkzeuggeräte ist bekannt aus DE 37 22 629 A1.

Es ist auch bekannt, im Getriebebereich von Werkzeuggeräten Auswuchteinheiten vorzusehen, DE 103 57 145 A1. Aus WO 03/00 2889 A ist bekannt, dass Auswuchteinheiten an einer beliesigen stelle einer Wolle eines rotierenden System angebiacht werden können.

Herstellungsbedingt kann es vorkommen, dass die Ankerwelle oder mit der Ankerwelle zusammenwirkende Komponenten des Elektrohandwerkzeuggeräts nicht exakt rotationssymmetrisch ausgebildet sind, so dass eine Unwucht entsteht. Dies führt beim rotierenden Antrieb der Ankerwelle zu Vibrationen, die das Arbeiten mit dem Elektrohandwerkzeuggerät erschweren und die Qualität des Arbeitsergebnisses beeinträchtigen. Die Ankerwelle muβ dems eventuell abgebremst und rasch stillgesetzt werden.

Der vorliegenden Erfindung liegt die Aufgabe zugrunde, diesem Problem zu begegnen.

Diese Aufgabe wird bei einem Elektrohandwerkzeuggerät der eingangs genannten Art erfindungsgemäß dadurch gelöst, dass eine fliehkraftbasierte Ausgleichsvorrichtung an dem werkzeugabgewandten und dem Handgriff zugewandten Ende der Ankerwelle vorgesehen ist mit mindestens einem Ausgleichskörper, der in Umfangsrichtung der Ankerwelle beweglich ist und sich bei Betrieb des Elektrohandwerkzeuggeräts bezüglich der Ankerwelle so anordnet, dass eine etwaige Unwucht ausgeglichen wird, und dass eine Bandbremseinrichtung mit einem flexibel biegsamen Flachmaterialabschnitt vorgesehen ist, der mit einer Flachseite einen Abschnitt der Ankerwelle in Umfangsrichtung zumindest teilweise umgibt und in einer ersten Funktionsstellung von dem Abschnitt der Ankerwelle radial beabstandet ist und in einer zweiten Funktionsstellung an dem Abschnitt der Ankerwelle anliegt, so dass die Ankerwelle durch den anliegenden Flachmaterialabschnitt der Bandbremseinrichtung abgebremst und rasch stillgesetzt wird.

Die Ausgleichskörper ordnen sich bei Betrieb des Elektrohandwerkzeuggeräts derart an, dass der Masseschwerpunkt von Ausgleichsvorrichtung und Ankerwelle mit der Drehachse der Ankerwelle zusammenfällt. So wird auf einfache Weise eine etwaige Unwucht ausgeglichen.

Es erweist sich als vorteilhaft, dass die Ausgleichsvorrichtung drehfest an einem dem Werkzeug abgewandten Ende der Ankerwelle, insbesondere lösbar, angeordnet ist. Die Ausgleichsvorrichtung kann klemmschlüssig, formschlüssig oder stoffschlüssig auf der Ankerwelle angeordnet sein.

Der mindestens eine Ausgleichskörper kann, zumindest grundsätzlich, ein Fluid umfassen. Bevorzugt wird jedoch eine Ausführungsform, bei der der mindestens eine Ausgleichskörper eine Kugel oder eine Zylinderrollen umfasst, die handelsüblich und kostengünstig ist.

Es erweist sich weiter von Vorteil, wenn die Ausgleichsvorrichtung einen topfförmigen Gehäusekörper aufweist, der eine insbesondere zylindrische Wandung umfasst. Der topfförmige Gehäusekörper weist an einem axialen Ende einen Gehäuseboden auf. Der topfförmige Gehäusekörper kann ein Gussteil umfassen. Es wird jedoch eine Ausführungsform bevorzugt, bei der der Gehäusekörper ein Tiefziehteil umfasst.

Darüber hinaus weist der topfförmige Gehäusekörper bei einer Ausführungsform einen insbesondere hohlzylindrischen Innenabschnitt auf, durch den die Ausgleichsvorrichtung auf der Ankerwelle anordenbar ist. Der Innenradius des hohlzylindrischen Innenabschnitts entspricht dabei im wesentlichen dem Radius der Ankerwelle. Dadurch ist der topfförmige Gehäusekörper auf einfache Weise mit der Ankerwelle, insbesondere klemmschlüssig, verbindbar.

In Weiterbildung der Erfindung wird vorgeschlagen, dass der mindestens eine Ausgleichskörper zwischen der Wandung und dem Innenabschnitt im wesentlichen spielfrei gegen eine Bewegung in radialer Richtung gehalten und in Umfangsrichtung beweglich ist. Hierdurch wird der Verschleiß der Ausgleichsvorrichtung und die Geräuschentwicklung reduziert.

Es erweist sich als vorteilhaft, wenn die Ausgleichsvorrichtung einen Gehäusedeckel aufweist. Dadurch ist der Ausgleichskörper verliersicher gehalten. Um die Reibung des Ausgleichskörpers zu reduzieren, erweist es sich als vorteilhaft, wenn die Ausgleichsvorrichtung zwischen der Wandung und dem Innenabschnitt eine Schmierung, insbesondere eine Ölschmierung, aufweist. Solchenfalls ist die Ausgleichsvorrichtung vorzugsweise flüssigkeitsdicht ausgebildet.

In Weiterbildung der Erfindung wird vorgeschlagen, dass der Gehäusedeckel eine zentrische kreisförmige Öffnung aufweist. Dadurch ist es möglich, die Ausgleichsvorrichtung so auf die Ankerwelle aufzuschieben, dass die Ankerwelle durch die Ausgleichsvorrichtung hindurchragt.

Darüber hinaus erweist es sich als vorteilhaft, wenn der Abschnitt der Ankerwelle einen erweiterten Umfang, insbesondere einen Wellenbund, aufweist.

In Weiterbildung der Erfindung ist der Abschnitt der Ankerwelle von einem, insbesondere lösbaren, axialen Verlängerungsabschnitt der Ankerwelle gebildet. Dadurch können verschiedene Abschnitte mit jeweils unterschiedlich erweitertem Umfang vorgesehen werden und einfach ausgetauscht werden.

Wenn die Ankerwelle durch den Elektromotor angetrieben wird, so befindet sich die Bandbremseinrichtung in der ersten Funktionsstellung. Wird die Ankerwelle nicht Wenn die Ankerwelle durch den Elektromotor angetrieben wird, so befindet sich die Bandbremseinrichtung in der ersten Funktionsstellung. Wird die Ankerwelle nicht angetrieben, befindet sich die Bandbremseinrichtung in der zweiten Funktionsstellung.

Es erweist sich als vorteilhaft, wenn der Antriebsstrang beim Wechsel von der ersten Funktionsstellung in die zweite Funktionsstellung nicht unterbrochen wird. Dadurch ist erreicht, dass alle Komponenten des Antriebsstrangs gleichzeitig mit der Ankerwelle stillgesetzt werden und dass das Elektrohandwerkzeuggerät dennoch einfach und kompakt ausgebildet werden kann.

In Weiterbildung der Erfindung liegt der flexibel biegsame Flachmaterialabschnitt an dem Abschnitt der Ankerwelle in einem Winkelbereich von 90° bis 300°, insbesondere von 120° bis 270°, insbesondere von 150° bis 240°, an. Je größer der Winkelbereich ist, über den der flexibel biegsame Flachmaterialabschnitt an dem Abschnitt der Ankerwelle anliegt, desto rascher kann die Ankerwelle stillgesetzt werden. Dadurch ist die Bremskraft und die Abbremszeit vorgebbar, wodurch ein Verschleiß einzelner Komponenten des Antriebsstrangs reduzierbar ist.

In Weiterbildung der Erfindung von besonderer Bedeutung ist der mit dem flexibel biegsamen Flachmaterialabschnitt der Bandbremseinrichtung zusammenwirkende Abschnitt der Ankerwelle von der Ausgleichsvorrichtung gebildet und der flexibel biegsame Flachmaterialabschnitt umgibt den Gehäusekörper der Ausgleichsvorrichtung in Umfangsrichtung zumindest teilweise. Solchenfalls liegt der flexibel biegsame Flachmaterialabschnitt mit seiner Flachseite an der Außenseite der Ausgleichsvorrichtung an.

Dabei erweist es sich als vorteilhaft, wenn der Gehäusekörper der Ausgleichsvorrichtung eine mit der Ankerwelle drehfeste Bremstrommel der Bandbremseinrichtung bildet.

In Hinblick auf die Ausbildung der Bandbremseinrichtung erweist es sich ferner als vorteilhaft, wenn eine erste gehäusefeste Halteeinrichtung vorgesehen ist, an der der flexibel biegsame Flachmaterialabschnitt mit einem ersten Ende befestigt ist. Dabei kann der flexibel biegsame Flachmaterialabschnitt lösbar oder unlösbar mit der ersten Halteeinrichtung verbunden sein.

Bevorzugt wird eine Ausführungsform der ersten Halteeinrichtung, die einen in Längsrichtung des Elektrohandwerkzeuggeräts erstreckten Vorsprung aufweist.

Darüber hinaus wird eine Ausführungsform bevorzugt, bei der die erste Halteeinrichtung mehrere in einer Längsrichtung des Elektrohandwerkzeuggeräts erstreckte Vorsprünge aufweist, so dass an der ersten Halteeinrichtung flexibel biegsame Flachmaterialabschnitte unterschiedlicher Länge befestigbar sind.

Darüber hinaus ist in Weiterbildung der Erfindung vorgesehen, dass das erste Ende des flexibel biegsamen Flachmaterialabschnitts insbesondere mehrfach umgebogen oder abgewinkelt ist und dadurch an der Halteeinrichtung verliersicher anordenbar ist.

Die erste Halteeinrichtung kann von Gehäusekomponenten des Handwerkzeuggeräts gebildet sein. Es erweist sich indessen als vorteilhaft, wenn die erste gehäusefeste Halteeinrichtung von einem vom Gehäuse des Elektrohandwerkzeuggeräts separaten Bauteil, insbesondere einem Biegestanzteil, insbesondere einem Blechteil, gebildet ist. Die Halteeinrichtung umfasst dabei das vom Gehäuse separate Bauteil, das vorteilhafterweise von dem Gehäuse gelöst werden kann. Die erste Halteeinrichtung, insbesondere wenn sie durch in Längsrichtung des Elektrohandwerkzeuggeräts erstreckte Vorsprünge gebildet ist, kann einstückig mit dem Bauteil ausgebildet sein, insbesondere dadurch, dass die Vorsprünge aus dem Bauteil gebogen sind.

In Weiterbildung der Erfindung wird vorgeschlagen, dass das die Halteeinrichtung bildende Bauteil, insbesondere das Biegestanzteil, formschlüssig und verliersicher bezüglich einer Gehäusekomponente des Elektrohandwerkzeuggeräts angeordnet ist. Hier kann eine in Umfangsrichtung verlaufende Nut in der Gehäusekomponente vorgesehen sein, in der das Bauteil, insbesondere das Biegestanzteil, gehalten ist. Es können jedoch auch Aussparungen oder Vorsprünge vorgesehen sein, so dass das Bauteil, insbesondere das Biegestanzteil, in die Gehäusekomponente eingesteckt oder eingeclipst werden kann.

Darüber hinaus erweist es sich als vorteilhaft, wenn eine einem zweiten Ende des flexibel biegsamen Flachmaterialabschnitts zugeordnete zweite gehäusefeste Halteeinrichtung vorgesehen ist. Mit dieser zweiten Halteeinrichtung kann der flexibel biegsame Flachmaterialabschnitt mittelbar oder unmittelbar verbunden sein.

Bevorzugt wird eine Ausführungsform, bei der die zweite Halteeinrichtung ein Federelement, insbesondere eine Zugfeder, aufweist, die den flexibel biegsamen Flachmaterialabschnitt in die zweite Funktionsstellung vorspannt. Der flexibel biegsame Flachmaterialabschnitt ist also einerseits an der ersten Halteeinrichtung angeordnet und andererseits an dem Federelement der zweiten Halteeinrichtung gehalten.

Von Vorteil ist, wenn die erste Halteeinrichtung und die zweite Halteeinrichtung von demselben Bauteil, gebildet sind.

Es erweist sich ferner als vorteilhaft, wenn das Elektrohandwerkzeuggerät einen manuell betätigbaren Schalterdrücker aufweist, der mit der Bandbremseinrichtung so zusammenwirkt, dass beim Betätigen des Schalterdrückers die Bandbremseinrichtung gelöst wird und beim Loslassen des Schalterdrückers die Bandbremseinrichtung aktiviert wird. Mit Betätigen des Schalterdrückers wird der elektromotorische Antrieb bestromt. Der Schalterdrücker kann direkt mit der Bandbremseinrichtung verbunden sein. Bevorzugt wird jedoch eine Ausführungsform, bei dem der Schalterdrücker über einen Freigabehebel, insbesondere über eine Wippe, mit der Bandbremseinrichtung zusammenwirkt, wobei der Freigabehebel mit seinem einen Ende auf das zweite Ende des flexibel biegsamen Flachmaterialabschnitts einwirkt. Beim Betätigen des Schalterdrückers wird der Freigabehebel derart ausgelenkt, dass er das Federelement spannt und damit den flexibel biegsamen Flachmaterialabschnitt von der zweiten Funktionsstellung in die erste Funktionsstellung bewegt, so dass der Flachmaterialabschnitt nicht mehr an dem Abschnitt der Ankerwelle anliegt. Gleichzeitig wird der elektromotorische Antrieb des Elektrohandwerkzeuggeräts bestromt und die Ankerwelle angetrieben.

Schließlich erweist es sich als vorteilhaft, wenn die Ankerwelle durch den anliegenden Flachmaterialabschnitt der Bandbremseinrichtung innerhalb von zwei bis vier Sekunden stillsetzbar ist. Dadurch wird ein Stoß, beispielsweise durch ein abruptes Abbremsen, vermieden und der Verschleiß der Komponenten des Antriebsstrangs reduziert.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform des erfindungsgemäßen Elektrohandwerkzeuggeräts. In der Zeichnung zeigen:
- Figur 1: eine Schnittansicht entlang einer Längsachse eines Bereichs eines erfindungsgemäßen Elektrohandwerkzeuggeräts;
- Figur 2: eine explosionsartige Darstellung einer Bandbremseinrichtung und von Gehäusekomponenten des Elektrohandwerkzeuggeräts gemäß Figur 1; und
- Figur 3: eine perspektivische und aufgerissene teilweise Darstellung des Elektrohandwerkzeuggeräts nach Figur 1.

Die Figuren zeigen einen Teil eines Elektrohandwerkzeuggeräts 2, beispielsweise eines Winkelschleifgeräts, bei dem ein Anker 4 mit einer Ankerwelle 6 vorgesehen ist, an der eine fliehkraftbasierte Ausgleichsvorrichtung 8 angeordnet ist, die bei Betrieb des Elektrohandwerkzeuggeräts eine etwaige Unwucht der Ankerwelle 6 ausgleicht. Dazu weist die Ausgleichsvorrichtung 8 eine Mehrzahl von Ausgleichskörpern 10 auf, die in Umfangsrichtung der Ankerwelle 6 beweglich sind und sich bei Betrieb des Elektrohandwerkzeuggeräts 2 bezüglich der Ankerwelle 6 so anordnen, dass eine etwaige Unwucht ausgeglichen wird.

Die Ankerwelle 6 ist Teil eines Antriebsstrangs in Richtung auf ein nicht dargestelltes rotierend, exzentrisch oder hin- und hergehend antreibbares Werkzeug, wie beispielsweise eine Trenn- oder Schruppscheibe.

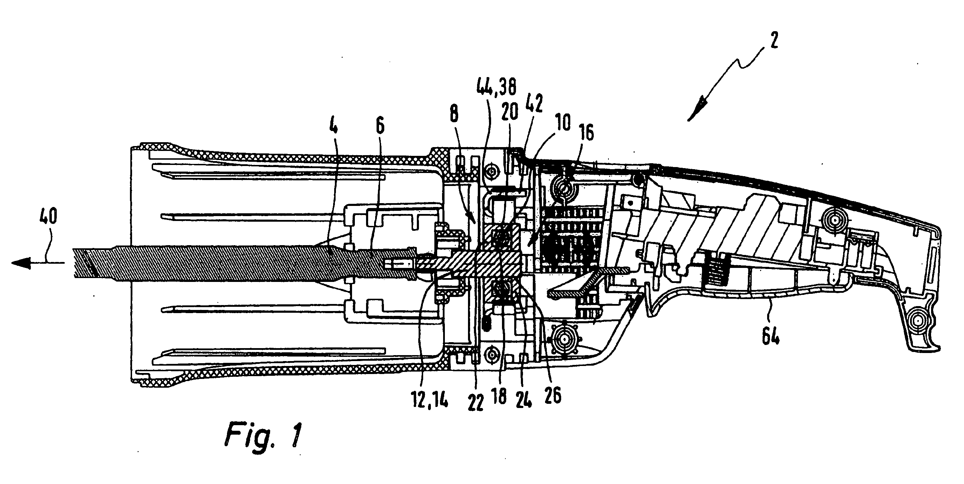

Bei dem in Figur 1 dargestellten Ausführungsbeispiel ist die Ausgleichsvorrichtung 8 drehfest an einem Abschnitt 14 der Ankerwelle 6 angeordnet. Der Abschnitt 14 ist seinerseits an einer lösbaren axialen Verlängerung 12 der Ankerwelle 6 gebildet. Die Ausgleichsvorrichtung 8 weist einen topfförmigen Gehäusekörper 16 auf, der einen zylindrischen Innenabschnitt 18 umfasst, mit dem die Ausgleichsvorrichtung 8 an dem Abschnitt 14 der Ankerwelle 6 drehfest angeordnet ist. Der Gehäusekörper 16 weist darüber hinaus eine zylindrische Wandung 20 auf. Zwischen dem zylindrischen Innenabschnitt 18 und der Wandung 20 sind die Ausgleichskörper 10 angeordnet. Die Ausgleichskörper 10 umfassen dabei Kugeln oder Zylinderrollen und sind in Umfangsrichtung der Ankerwelle 6 beweglich. Die Ausgleichskörper 10 sind gegen eine Bewegung in Längsrichtung des Elektrohandwerkzeuggeräts 2 einerseits durch einen Gehäuseboden 22 des Gehäusekörpers 16 und andererseits durch einen Gehäusedeckel 24 gehalten. Der Gehäusedeckel 24 ist so an dem Gehäusekörper 16 anordenbar, dass der durch den zylindrischen Innenabschnitt 18, die Wandung 20, den Gehäuseboden 22 und den Gehäusedeckel 24 umschlossene Raum, in dem die Ausgleichskörper 10 beweglich sind, nach außen flüssigkeitsdicht umschlossen ist. Dadurch ist es möglich, die Ausgleichskörper 10 mit einem Fluid, beispielsweise Öl, zu schmieren, um die Reibung zwischen Ausgleichskörpern 10 und Gehäusekörper 16 zu reduzieren. Der Gehäusedeckel 24 weist eine zentrische Öffnung 26 auf, die so ausgebildet ist, dass der Gehäusekörper 16 mit Gehäusedeckel 24 auf die Ankerwelle 6 aufschiebbar ist.

Im Folgenden wird die Wirkungsweise des erfindungsgemäßen Handwerkzeuggeräts 2 beschrieben:

Bei Betrieb des Elektrohandwerkzeuggeräts, also wenn die Ankerwelle 6 durch den Anker 4 drehend angetrieben wird, wird auch die mit der Ankerwelle 6 drehfest verbundene Ausgleichsvorrichtung 8 drehend angetrieben. Aufgrund der Fliehkräfte ordnen sich die Ausgleichskörper 10 im Gehäusekörper 16 so an, dass der Massenschwerpunkt von Ausgleichsvorrichtung 8 und Ankerwelle 6 mit der Drehachse der Ankerwelle 6 zusammenfällt und eine etwaige Unwucht ausgeglichen wird, wodurch Vibrationen, infolge der Unwucht, reduziert werden.

Die Figuren zeigen außerdem eine Ausführungsform des Elektrohandwerkzeuggeräts, bei dem eine Bandbremseinrichtung 28 vorgesehen ist. In einer ersten Funktionsstellung, in der die Ankerwelle 6 elektromotorisch angetrieben wird, gibt die Bandbremseinrichtung 26 die Ankerwelle 6 frei. In einer zweiten Funktionsstellung, in der die Ankerwelle 6 nicht angetrieben wird, bremst die Bandbremseinrichtung 26 die Ankerwelle 6 und legt sie fest.

Die Bandbremseinrichtung 28 umfasst einen flexibel biegsamen Flachmaterialabschnitt 30, der mit einer Flachseite 32 den Abschnitt 14 der Ankerwelle 6 in Umfangsrichtung zumindest teilweise umgibt. In der ersten Funktionsstellung des Elektrohandwerkzeuggeräts 2 beziehungsweise der Bandbremseinrichtung 28, in der die Ankerwelle 6 elektromotorisch angetrieben ist, ist der flexibel biegsame Flachmaterialabschnitt 30 zum Abschnitt 14 der Ankerwelle 6 in radialer Richtung beabstandet. In der zweiten Funktionsstellung, in der die Ankerwelle 6 nicht angetrieben ist, liegt der Flachmaterialabschnitt 30 am Abschnitt 14 der Ankerwelle 6 an und bremst dadurch die Ankerwelle 6 bis zum Stillstand.

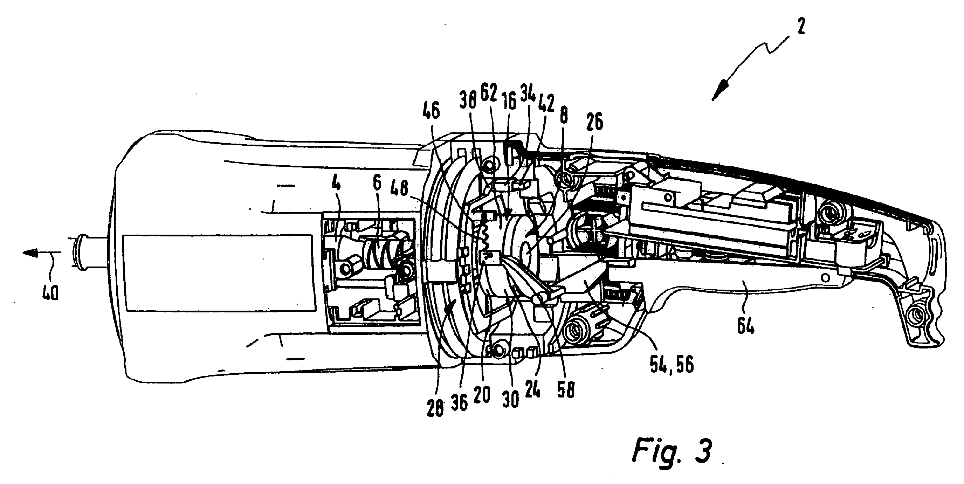

Die Figuren 1 und 3 zeigen, dass der mit dem flexibel biegsamen Flachmaterialabschnitt 30 zusammenwirkende Abschnitt 14 von der Ausgleichsvorrichtung 8 gebildet ist, wobei der flexibel biegsame Flachmaterialabschnitt 30 an der zylindrischen Wandung 20 des Gehäusekörpers 16 der Ausgleichsvorrichtung 8 in Umfangsrichtung zumindest teilweise anliegt.

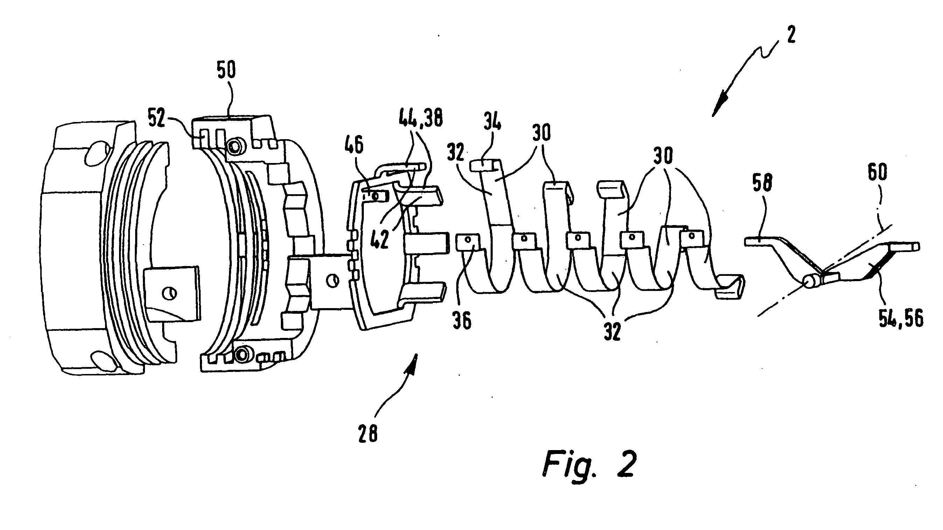

Figur 2 zeigt eine explosionsartige Darstellung der Bandbremseinrichtung 28, in der eine Mehrzahl unterschiedlich langer Flachmaterialabschnitte 30 gezeigt sind, die herstellerseitig wahlweise verwendet werden können. Bei Montage des Elektrohandwerkzeuggeräts 2 ist jeweils nur ein einziger der Flachmaterialabschnitte 30 vorgesehen.

Der flexibel biegsame Flachmaterialabschnitt 30 weist ein erstes Ende 34 und ein zweites Ende 36 auf. Das erste Ende 34 ist bezüglich der Flachseite 32 umgebogen oder abgewinkelt. Mit dem ersten Ende 34 ist der flexibel biegsame Flachmaterialabschnitt 30 in einer ersten Halteeinrichtung 38, die in einer Längsrichtung 40 erstreckte Vorsprünge 42 umfasst, angeordnet. Jedem Vorsprung 42 ist ein flexibel biegsamer Flachmaterialabschnitt 30 zugeordnet. Die erste Halteeinrichtung 38 umfasst dabei ein ringförmiges Biegestanzteil 44. Das Biegestanzteil 44 bildet außer der ersten Halteeinrichtung 38 auch eine zweite Halteeinrichtung 46, die dem zweiten Ende 36 des flexibel biegsamen Flachmaterialabschnitts 30 zugeordnet ist. Figur 3 zeigt, dass die zweite Halteeinrichtung 46 außerdem ein Federelement 48 aufweist, dass mit dem zweiten Ende 36 des flexibel biegsamen Flachmaterialabschnitts 30 verbindbar ist.

Das Biegestanzteil 44 ist in einer Gehäusekomponente 50 des Elektrohandwerkzeuggeräts 2 verliersicher angeordnet. Dazu ist in der Gehäusekomponente 50 eine in Umfangsrichtung bezüglich der Ankerwelle 6 verlaufende Nut 52 vorgesehen, in die das Biegestanzteil 44 einsteckbar ist und dadurch gehalten ist.

Darüber hinaus zeigt Figur 3, dass ein mit der Bandbremseinrichtung 28 zusammenwirkender und als Wippe 54 ausgebildeter Freigabehebel 56 vorgesehen ist. Der Freigabehebel 56 weist ein Ende 58 auf, das mit dem zweiten Ende 36 des flexibel biegsamen Flachmaterialabschnitts 30 zusammenwirkt. Dabei ist der Freigabehebel 56 um eine Kippachse 60 schwenkbar gelagert.

Im Folgenden wird die Wirkungsweise der dargestellten Ausführungsform des erfindungsgemäßen Handwerkzeuggeräts 2 beschrieben:

Beim Betätigen eines Schalterdrückers 64 wird der elektromotorische Antrieb bestromt und die Bandbremseinrichtung 28 gelöst. Der Schalterdrücker 64 wirkt auf den als Wippe 54 ausgebildeten Freigabehebel 56 derart, dass er sich um die Kippachse 60 dreht. Dabei wird das Ende 58 des Freigabehebels 56 in der Bildebene der Figur 3 nach unten bewegt. Diese Bewegung führt dazu, dass auch das zweite Ende 36 des flexibel biegsamen Flachmaterialabschnitts 30 entgegen der Federspannung des Federelements 48 nach unten bewegt wird. Dadurch löst sich der flexibel biegsame Flachmaterialabschnitt 30 von der als Bremstrommel 42 ausgebildeten Ausgleichsvorrichtung 8, so dass der flexibel biegsame Flachmaterialabschnitt 30 zu der Ausgleichsvorrichtung 8 in radialer Richtung beabstandet ist. Die Bandbremseinrichtung 28 befindet sich nun in ihrer ersten Funktionsstellung. Die Ankerwelle 6 ist so antreibbar, ohne durch die Bandbremseinrichtung 28 gebremst zu werden.

Beim Ausschalten des Elektrohandwerkzeuggeräts 2, also beim Loslassen des Schalterdrückers 64, wirkt am Ende 58 des Freigabehebels 56 nunmehr keine das Federelement 48 auslenkende Kraft entgegen. Das Federelement 48 zieht somit das zweite Ende 36 des flexibel biegsamen Flachmaterialabschnitts 30 in Richtung auf die Ausgleichsvorrichtung 8 der Ankerwelle 6, wodurch der flexibel biegsame Flachmaterialabschnitt 30 mit seiner Flachseite 32 an der Wandung 20 des Gehäusekörpers 16 der Ausgleichsvorrichtung 8 anliegt und die Ankerwelle 6 bremst und stillsetzt. Die Bandbremseinrichtung 28 befindet sich nun in ihrer zweiten Funktionsstellung.

Über die Aufhängung des flexibel biegsamen Flachmaterialabschnitts 30 mit seinem ersten Ende 34 an der ersten Halteeinrichtung 38 werden die beim Abbremsen der Ankerwelle 6 auftretenden Kräfte, über die erste Halteeinrichtung 38 an die Gehäusekomponente 50 übertragen. Eventuell entstehende Unwuchten werden durch die Ausgleichsvorrichtung 8 ausgeglichen, so dass ein schwingungsarmer Betrieb des Elektrohandwerkzeuggeräts 2 gewährleistet ist.

## Patentansprüche

1. Elektrohandwerkzeuggerät (2), insbesondere Winkelschleifer, umfassend einen Anker (4) mit einer in einer Längsrichtung (40) erstreckten Ankerwelle (6) mit einer werkzeugseitigen Abtriebsseite und einem gegenüberliegenden werkzeugabgewandten und einem Handgriff zugewandten Ende, die einen Teil eines Antriebsstrangs in Richtung auf ein rotierend, exzentrisch oder hin- und hergehend antreibbares Werkzeug, wie z.B. eine Trenn- oder Schruppscheibe, bildet, **dadurch gekennzeichnet, dass** eine fliehkraftbasierte Ausgleichsvorrichtung (8) an dem werkzeugabgewandten und dem Handgriff zugewandten Ende der Ankerwelle (6) vorgesehen ist mit mindestens einem Ausgleichskörper (10), der in Umfangsrichtung der Ankerwelle (6) beweglich ist und sich bei Betrieb des Elektrohandwerkzeuggeräts (2) bezüglich der Ankerwelle (6) so anordnet, dass eine etwaige Unwucht ausgeglichen wird, und dass eine Bandbremseinrichtung (28) mit einem flexibel biegsamen Flachmaterialabschnitt (30) vorgesehen ist, der mit einer Flachseite (32) einen Abschnitt der Ankerwelle (6) in Umfangsrichtung zumindest teilweise umgibt und in einer ersten Funktionsstellung von dem Abschnitt der Ankerwelle (6) radial beabstandet ist und in einer zweiten Funktionsstellung an dem Abschnitt der Ankerwelle (6) anliegt, so dass die Ankerwelle (6) durch den anliegenden Flachmaterialabschnitt (30) der Bandbremseinrichtung (28) abgebremst und rasch stillgesetzt wird.

2. Elektrohandwerkzeuggerät (2) nach Anspruch 1, **dadurch gekennzeichnet, dass** die Ausgleichsvorrichtung (8) einen topfförmigen Gehäusekörper (16) aufweist, der außen eine zylindrische Wandung (20) aufweist.

3. Elektrohandwerkzeuggerät (2) nach Anspruch 1 oder 2, **dadurch gekennzeichnet, dass** der topfförmige Gehäusekörper (16) innen einen hohlzylindrischen Innenabschnitt (18) aufweist, durch den die Ausgleichsvorrichtung (8) auf der Ankerwelle (6) anordenbar ist.

4. Elektrohandwerkzeuggerät (2) nach einem der vorstehenden Ansprüche , **dadurch gekennzeichnet, dass** die Ausgleichsvorrichtung (8) einen Gehäusedeckel (24) aufweist.

5. Elektrohandwerkzeuggerät (2) nach einem der vorhergehenden Ansprüche, **dadurch gekennzeichnet, dass** der Abschnitt (14) der Ankerwelle (6) von einem, insbesondere lösbaren, axialen Verlängerungsabschnitt (12) der Ankerwelle (6) gebildet ist.

6. Elektrohandwerkzeug (2) nach einem der vohergehenden Ansprüche, **dadurch gekennzeichnet, dass** der mit dem flexibel biegsamen Flachmaterialabschnitt (30) der Bandbremseinrichtung (28) zusammenwirkende Abschnitt der Ankerwelle von der Ausgleichsvorrichtung (8) gebildet ist und dass der flexibel biegsame Flachmaterialabschnitt (30) den Gehäusekörper (16) der Ausgleichsvorrichtung (8) in Umfangsrichtung zumindest teilweise umgibt.

7. Elektrohandwerkzeug (2) nach einen der vorheigehenden Ansprüche, **dadurch gekennzeichnet, dass** der Gehäusekörper (16) der Ausgleichsvorrichtung (8) eine mit der Ankerwelle drehfeste Bremstrommel der Bandbremseinrichtung (28) bildet.

8. Elektrohandwerkzeuggerät (2) nach einem der vorhergenden Ansprüche **dadurch gekennzeichnet, dass** eine erste gehäusefeste Halteeinrichtung (38) für den Flachmaterialabschnitt (30) vorgesehen ist, an der der flexibel biegsame Flachmaterialabschnitt (30) mit einem ersten Ende (34) befestigt ist.

9. Elektrohandwerkzeuggerät (2) nach Anspruch 8, **dadurch gekennzeichnet, dass** die erste Halteeinrichtung (38) einen in einer Längsrichtung des Elektrohandwerkzeuggeräts (2) erstreckten Vorsprung (42) aufweist oder mehrere in einer Längsrichtung des Elektrohandwerkzeuggeräts (2) erstreckte Vorsprünge (42) aufweist, so dass an der ersten Halteeinrichtung (38) flexibel biegsame Flachmaterialabschnitte (30) unterschiedlicher Länge befestigbar sind.

10. Elektrohandwerkzeuggerät (2) nach Anspruch 8 oder 9, **dadurch gekennzeichnet, dass** die erste gehäusefeste Halteeinrichtung (38) von einem separaten Bauteil (44), insbesondere einem Biegestanzteil (44), insbesondere einem Blechteil, gebildet ist, das formschlüssig und verliersicher bezüglich einer Gehäusekomponente (50) des Elektrohandwerkzeuggeräts (2) angeordnet ist.

11. Elektrohandwerkzeuggerät (2) nach einem der Ansprüche 8 bis 10, **gekennzeichnet durch** eine einem zweiten Ende (36) des flexibel biegsamen Flachmaterialabschnitts (30) zugeordnete zweite gehäusefeste Halteeinrichtung (46), die ein Federelement (48) aufweist, das den flexibel biegsamen Flachmaterialabschnitt (30) in die zweite Funktionsstellung vorspannt.

12. Elektrohandwerkzeuggerät (2) nach einem der Ansprüche 8 bis 11, **dadurch gekennzeichnet, dass** die erste Halteeinrichtung (38) und eine einem zweiten Ende (36) des flexibel biegsamen Flachmaterialabschnitts (30) zugeordnete zweite gehäusefeste Halteeinrichtung (46) von demselben Bauteil (44) gebildet sind.

13. Elektrohandwerkzeuggerät (2) nach einem der vorheigehenden Ansprüche **gekennzeichnet durch** einen manuell betätigbaren Schalterdrücker (64) der mit der Bandbremseinrichtung (28) so zusammenwirkt, dass beim Betätigen des Schalterdrückers (64) die Bandbremseinrichtung (28) gelöst wird und beim Lösen des Schalterdrückers (64) die Bandbremseinrichtung (28) aktiviert wird.

14. Elektrohandwerkzeuggerät nach Anspruch 13, **dadurch gekennzeichnet, dass** der Schalterdrücker (64) über einen Freigabehebel (56), insbesondere über eine Wippe (54), mit der Bandbremseinrichtung (28) zusammenwirkt, wobei der Freigabehebel (56) mit seinem einen Ende (58) auf das zweite Ende (36) des flexibel biegsamen Flachmaterialabschnitts (30) einwirkt.

## Claims

1. Electric hand tool appliance (2), in particular an angle grinder, comprising an armature (4) with an armature shaft (6) which extends in a longitudinal direction (40) and has a drive output side on the same side as the tool and an opposite end which faces away from the tool and towards a handle, and which armature shaft forms part of a drive train in the direction of a tool, such as a cutting-off or roughing disc for example, which can be driven in a rotating, eccentric or reciprocating manner, **characterised in that**
there is provided, at that end of the armature shaft (6) which faces away from the tool and towards the handle, a centrifugal force-based compensating device (8) which has at least one compensating body (10) which is movable in the peripheral direction of the armature shaft (6) and which, when the electric hand tool appliance (2) is in operation, is so arranged, with respect to said armature shaft (6), that any imbalance is compensated for;
and that a strip-type braking apparatus (28) is provided which has a flexibly bendable section of flat material (30) which at least partially surrounds a section of the armature shaft (6) in the peripheral direction by means of a flat side (32) and, in a first functioning position, is spaced apart radially from the section of the armature shaft (6) and, in a second functioning position, bears against said section of the armature shaft (6), so that said armature shaft (6) is braked by that section of flat material (30) of the strip-type braking apparatus (28) which bears against it, and is rapidly brought to a standstill.

2. Electric hand tool appliance (2) according to claim 1, **characterised in that** the compensating device (8) has a pot-shaped casing body (16) which has, on the outside, a cylindrical wall (20).

3. Electric hand tool appliance (2) according to claim 1 or 2, **characterised in that** the pot-shaped casing body (16) has, on the inside, a hollow cylindrical inner section (18) by means of which the compensating device (8) can be arranged on the armature shaft (6).

4. Electric hand tool appliance (2) according to one of the preceding claims, **characterised in that** the compensating device (8) has a casing cover (24).

5. Electric hand tool appliance (2) according to one of the preceding claims, **characterised in that** the section (14) of the armature shaft (6) is formed by an, in particular detachable, axial prolonging section (12) of said armature shaft (6).

6. Electric hand tool appliance (2) according to one of the preceding claims, **characterised in that** that section of the armature shaft which interacts with the flexibly bendable section of flat material (30) of the strip-type braking apparatus (28) is formed by the compensating device (8), and that the flexibly bendable section of flat material (30) at least partially surrounds the casing body (16) of said compensating device (8) in the peripheral direction.

7. Electric hand tool appliance (2) according to one of the preceding claims, **characterised in that** the casing body (16) of the compensating device (8) forms a brake drum of the strip-type braking apparatus (28), which brake drum is rotationally integral with the armature shaft.

8. Electric hand tool appliance (2) according to one of the preceding claims, **characterised in that** a first holding apparatus (38) for the section of flat material (30) is provided, which is integral with the casing and to which said flexibly bendable section of flat material (30) is fastened by a first end (34).

9. Electric hand tool appliance (2) according to claim 8, **characterised in that** the first holding apparatus (38) has a projection (42) which extends in a longitudinal direction of the electric hand tool appliance (2), or has a number of projections (42) which extend in a longitudinal direction of the electric hand tool appliance (2), so that flexibly bendable sections of flat material (30) of differing length can be fastened to said first holding apparatus (38).

10. Electric hand tool appliance (2) according to claim 8 or 9, **characterised in that** the first holding apparatus (38), which is integral with the casing, is formed by a separate component (44), in particular a part (44) produced by combined cutting and bending, in particular a sheet-metal part, which is arranged in a form-locking and captive manner with respect to a casing component (50) of the electric hand tool appliance (2).

11. Electric hand tool appliance (2) according to one of claims 8 to 10, **characterised by** a second holding apparatus (46) which is integral with the casing, is associated with a second end (36) of the flexibly bendable section of flat material (30) and has a spring element (48) which pretensions said flexibly bendable section of flat material (30) into the second functioning position.

12. Electric hand tool appliance (2) according to one of claims 8 to 11, **characterised in that** the first holding apparatus (38) and a second holding apparatus (46), which is integral with the casing and is associated with a second end (36) of the flexibly bendable section of flat material (30), are formed by the same component (44).

13. Electric hand tool appliance (2) according to one of the preceding claims, **characterised by** a manually actuatable switch push-button (64) which interacts with the strip-type braking apparatus (28) in such a way that, when the switch push-button (64) is actuated, the strip-type braking apparatus (28) is released and, when the switch push-button (64) is released, the strip-type braking apparatus (28) is activated.

14. Electric hand tool appliance according to claim 13, **characterised in that** the switch push-button (64) interacts with the strip-type braking apparatus (28) via a releasing lever (56), in particular via a rocker (54), said releasing lever (56) acting, by means of one of its ends (58), on the second end (36) of the flexibly bendable section of flat material (30).

## Revendications

1. Outil électrique manuel (2), en particulier meuleuse d'angle, comprenant un induit (4) comportant un arbre d'induit (6) qui s'étend dans la direction longitudinale (40) et présente un côté de sortie situé côté outil et une extrémité opposée, éloignée de l'outil et dirigée vers la poignée, ledit arbre formant une partie d'une chaîne cinématique aboutissant à un outil tel que, par exemple, un disque de segmenteuse ou de découpeuse, **caractérisé en ce qu'**il comporte, à l'extrémité de l'arbre d'induit (6) éloignée de l'outil et dirigée vers la poignée, un dispositif d'équilibrage (8) basé sur la force centrifuge, comportant au moins un corps d'équilibrage (10) qui est mobile dans la direction circonférentielle de l'arbre d'induit (6) et qui, pendant le travail de l'outil électrique manuel (2), se place, par rapport à l'arbre d'induit (6) de telle manière qu'un éventuel balourd soit équilibré, et **en ce qu'**il comporte également un dispositif de freinage à bande (28) comportant un segment de matière plate (30) souple et flexible qui, par un côté plat (32), entoure au moins partiellement dans la direction circonférentielle, un segment de l'arbre d'induit (6) et qui est, dans une première position de fonctionnement, espacé radialement de la longueur de l'arbre d'induit (6) et, dans une seconde position de fonctionnement, en appui contre le segment de l'arbre d'induit (6) de sorte que l'arbre d'induit (6) est freiné et rapidement immobilisé par le segment de matière plate (30) du dispositif de freinage à bande (28).

2. Outil électrique manuel (2) selon la revendication 1, **caractérisé en ce que** le dispositif d'équilibrage (8) comporte un corps de carter (16) en forme de godet qui comporte extérieurement une paroi cylindrique (20).

3. Outil électrique manuel (2) selon la revendication 1 ou 2, **caractérisé en ce que** le corps de carter (16) en forme de godet comporte intérieurement un segment intérieur cylindrique creux (18) par lequel le dispositif d'équilibrage (8) peut être disposé sur l'arbre d'induit (6).

4. Outil électrique manuel (2) selon l'une des revendications précédentes, **caractérisé en ce que** le dispositif d'équilibrage (8) comporte un couvercle de carter (24).

5. Outil électrique manuel (2) selon l'une des revendications précédentes, **caractérisé en ce que** le segment (14) de l'arbre d'induit (6) est constitué par un segment de prolongement axial (12), en particulier amovible, de l'arbre d'induit (6).

6. Outil électrique manuel (2) selon l'une des revendications précédentes, **caractérisé en ce que** le segment de l'arbre d'induit qui coopère avec le segment de matière plate souple et flexible (30) du dispositif de freinage à bande (28) est constitué par le dispositif d'équilibrage (8), et **en ce que** le segment de matière plate souple et flexible (30) entoure au moins partiellement le corps de carter (16) du dispositif d'équilibrage (8) dans la direction circonférentielle.

7. Outil électrique manuel (2) selon une des revendications précédentes, **caractérisé en ce que** le corps de carter (16) du dispositif d'équilibrage (8) forme un tambour de frein du dispositif de freinage à bande (28) qui est solidaire de l'arbre d'induit en rotation.

8. Outil électrique manuel (2) selon l'une des revendications précédentes, **caractérisé en ce qu'**il comporte un premier dispositif de retenue (38) solidaire du carter pour le segment de matière plate (30), et auquel le segment de matière plate souple et flexible (30) est fixé par une première extrémité (34).

9. Outil électrique manuel (2) selon la revendication 8, **caractérisé en ce que** le premier dispositif de retenue (38) comporte une saillie (42) allongée dans une direction longitudinale de l'outil électrique manuel (2) ou plusieurs saillies (42) allongées dans une direction longitudinale de l'outil électrique manuel (2), de telle manière que des segments de matière plate souple et flexible (30) de différentes longueurs puissent être fixés au premier dispositif de retenue (38).

10. Outil électrique manuel (2) selon la revendication 8 ou 9, **caractérisé en ce que** le premier dispositif de retenue (38) solidaire du carter est constitué par un élément séparé (44), en particulier par une pièce découpée et pliée (44), en particulier une pièce de tôle, qui est agencée avec une liaison par complémentarité de forme et de façon imperdable par rapport à un élément de carter (50) de l'outil électrique manuel (2).

11. Outil électrique manuel (2) selon l'une des revendications 8 à 10 **caractérisé par** un second dispositif de retenue (46) solidaire du carter, associé à une seconde extrémité (36) du segment de matière plate souple et flexible (30) et qui comporte un élément élastique (48) qui précontraint le segment de matière plate souple et flexible (30) dans la seconde position fonctionnelle.

12. Outil électrique manuel (2) selon l'une des revendications 8 à 11, **caractérisé en ce que** le premier dispositif de retenue (38) et un second dispositif de retenue (46) solidaire du carter, associé à une seconde extrémité (36) du segment de matière plate souple et flexible (30) sont constitués par le même élément (44).

13. Outil électrique manuel (2) selon l'une des revendications précédentes, **caractérisé par** un interrupteur à poussoir (64) pouvant être actionné manuellement qui coopère avec le dispositif de freinage à bande (28) de telle manière que le dispositif de freinage à bande (28) soit desserré lors de l'actionnement de l'interrupteur à poussoir (64) et que le dispositif de freinage à bande (28) soit activé lors du relâchement de l'interrupteur à poussoir (64).

14. Outil électrique manuel (2) selon la revendication 13, **caractérisé en ce que** l'interrupteur à poussoir (64) coopère avec le dispositif de freinage à bande (28) par l'intermédiaire d'un levier de libération (56), en particulier d'une bascule (54), le levier de libération (56) agissant par son extrémité (58) sur la seconde extrémité (36) du segment de matière plate souple et flexible (30).
